# EUROPEAN PATENT SPECIFICATION

(11) **EP 1 467 648 B1**
(45) Date of publication and mention of the grant of the patent: **16.07.2008**
(21) Application number: 03706372.4
(22) Date of filing: 23.01.2003
(51) Int. Cl.: A47L 23/26, A47G 27/02, B32B 3/02

(54) **WASHABLE FLOOR MAT**
WASCHBARE FUSSBODENMATTE
PAILLASSON LAVABLE

(30) Priority: 24.01.2002 GB 0201577; 21.09.2002 GB 0222007
(43) Date of publication of application: 20.10.2004
(73) Proprietor: Milliken Denmark A/S, 8644 Morke (DK)
(72) Inventor: LANG, Aage, DK-8560 Kolind (DK); POELMANNS, Albert, B-9200 Mespelare (BE); JENSEN, Ejvind, DK-8543 Hornslet (DK)
(74) Representative: Raynor, Simon Mark
(86) International application number: PCT/EP2003/000645
(87) International publication number: WO 2003/061450

(56) References cited:
- EP-A- 0 965 300
- WO-A-95/30040
- US-A- 5 567 256
- US-A- 5 652 038

## Description

The present invention relates to a washable floor mat having a tufted pile textile surface and an elastomer backing, which is suitable for periodic washing, for example in a laundry. In particular, the invention relates to a mat with a textile surface made wholly or largely of cotton. The invention also relates to a method of making such a mat.

Industrial or rental mats are generally owned by a laundry, which rents the mats to its customers. The mats are usually placed at the entrances to shops, offices and factories to remove dirt and moisture from the feet of pedestrians entering the building. Periodically, soiled mats are exchanged for clean ones and the soiled mats are returned to the laundry for washing and drying. Owing to their intended use, it is essential that the mats are durable and have very high levels of washability.

These mats typically comprise a tufted pile textile top surface having good moisture and dirt absorbing properties and a backing layer of an elastomer material, for example rubber. Various different textile materials are available, including synthetic materials such as high twist nylon and natural fibres such as cotton. Nylon mats have very good dust control properties, are hard wearing and can be washed and dried economically. However, they do not have very good moisture absorbing properties. Cotton mats on the other hand have very good moisture absorbing properties, but they tend to be less durable than nylon mats. Also, owing to their high moisture absorbing characteristics, they are very energy intensive to dry after washing, by spinning and tumble drying. This is a very important commercial factor, since energy costs generally comprise a very large proportion of the overall costs of the laundry.

It is known to provide a washable floor mat with a tufted pile textile surface that comprises a variety of fibre types. For example, EP 0965300 A discloses a mat having a textile surface that includes 75% tufts of nylon and 25% tufts made by twisting two plies of cotton with a nylon monofilament. Instead of pure cotton, the cotton can be blended with low melting point polyester, which is partially melted and fused to the cotton. In another embodiment, the mat includes 40% twisted nylon, 40% cotton or cotton blend and 20% nylon monofilaments.

GB 2362568 A describes another mat having a textile surface that includes 50% tufts of nylon and 50% tufts of a blended yarn that includes cotton, an anti-microbial acrylic fibre, and low melting point polyester that is partially fused to the other two fibres.

However, in both of these prior art mats, the cotton or cotton blend yarn forms only part of the tufted pile surface and comprises less than 50% of the total fibre content of that surface. Those mats therefore have neither the moisture absorbing properties nor the appearance of a mat with a cotton textile surface.

US 5,567,256 discloses a cotton room-size rug with a textile surface made of 70-90% cotton fibres and 30-10% low melting point polyester fibres. The cotton and polyester fibres are spun and then heat set to melt the polyester fibres and fuse them to the cotton fibres, giving them more strength and resilience.

It is an object of the present invention to provide a mat with a cotton tufted pile textile surface, which mitigates at least some of the aforesaid problems.

According to the present invention there is provided a washable floor mat having a tufted pile textile surface and an elastomer backing layer, wherein the textile surface includes tufts of a blended yam that includes at least 40% cotton fibres and at least 25% polyester fibres, the cotton and polyester fibres together comprising at least 90% by weight of the total fibre content of the blended yarn; characterised in that the polyester fibres are not fused to the cotton fibres.

We have found that a mat with a tufted textile surface of blended cotton and polyester is surprisingly as effective at removing moisture from the feet of pedestrians as a mat with a 100% cotton textile surface. However, it is much easier to dry, requiring significantly less energy input during spinning and tumble drying. It is also much harder wearing than a 100% cotton mat, with linting of the cotton fibre during washing and drying being significantly reduced. The mat therefore has a longer useful lifespan and is much cheaper to clean, thereby significantly reducing the operating costs of the laundry. We have also found that the blended yarn has much better colour retention than a pure cotton yam.

Advantageously, the cotton and polyester fibres together comprise at least 95%, and preferably at least 99%, of the total fibre content of the blended yam. The blended yarn may also include some other fibres, e.g. polyamide, but generally this should not exceed 5% by weight.

Preferably, the blended yarn includes at least 50% cotton fibres and at least 35% polyester fibres. We have found that blends of 65% cotton with 35% polyester and 50% cotton with 50% polyester are particularly effective.

Advantageously, the blended yarn preferably comprises at least 90%, preferably at least 95%, and more preferably at least 99%, of the tufted pile surface.

The cotton and polyester fibres of the blended yarn are preferably spun together. We have found that the beneficial effects of the blended yarn are particularly pronounced when the cotton and polyester fibres are in intimate mechanical contact with each other, which is best achieved by mixing the fibres and spinning them together into a yarn.

The tufts of blended yarn may include from one to six plies of yarn. The overall decitex of the blended yarn should be similar to the decitex of a cotton yarn and the number of plies used should also ideally match that of a typical cotton yarn. For example, the yarn may include six plies and have a decitex of 4430 ±100.

The polyester fibre may have a denier of 1 to 6, preferably 1 to 2, more preferably about 1.5. The use of fine denier polyester fibre results in a larger number of fibres for the same proportion of polyester in the blend. It is believed that this improves the properties of the blend for mats.

The blended yarn may include up to 10% microfiber polyester, said microfiber polyester having a size of less than 1 denier, preferably approximately 0.9 denier. For example, we have found that a blend of 50% cotton with 45% polyester and 5% polyester microfiber of 0.9 denier is particularly effective.

The textile surface may include a woven or non-woven substrate, which may be formed of a polyester, polypropylene or copolymer material, or any other suitable material.

The backing layer may be made of rubber, preferably nitrile rubber. The thickness of the backing layer may be from 0.5mm to 4mm. Advantageously, the backing layer is made of a foamed rubber. This reduces the weight of the mat, so making it easier and cheaper to transport, and increases its flexibility. We have also found that a mat with a foam rubber backing layer is less prone to move when stepped on, particularly when placed on top of carpet.

The use of a foam backing in combination with the use of tufts of blended yarn provides the advantage that, when the mat is laundered, there is a synergistic saving of energy resulting from the lower weight of the foam backing in combination with the lower residual water content (i.e. the water remaining at various stages of the drying process) of the blended yarn as compared with 100% cotton yarn.

According to another aspect of the invention there is provided a method of manufacturing a washable floor mat, said method comprising the steps of (a) mixing cotton fibres and polyester fibres together; (b) spinning the mixed cotton fibres and polyester fibres together to form a blended yam comprising at least 40% cotton fibres and at least 25% polyester fibres, and wherein the cotton fibres and the polyester fibres comprise at least 90% of the total fibre content of the blended yarn; (c) tufting a plurality of the blended yarns of step (b) through a woven or non-woven substrate to form a tufted pile surface, wherein the blended yarn comprises at least 90% of the tufted pile surface; and (d) bonding the tufted pile surface of step (c) to an elastomer backing layer by positioning the tufted pile surface on the elastomer backing layer and subjecting the tufted pile surface and the elastomer backing layer to heat and pressure, characterised in that during the bonding process, the temperature is controlled to ensure that the polyester fibres are not fused to the cotton fibres.

Advantageously, the tufted pile textile surface is bonded to the elastomer backing layer by vulcanising the backing layer in a heated press.

Embodiments of the invention will now be described, by way of example, with reference to the accompanying drawings, in which:
Figure 1 is a plan view of a mat according to the invention, and
Figure 2 is a cross sectional side elevation of the mat shown in figure 1.

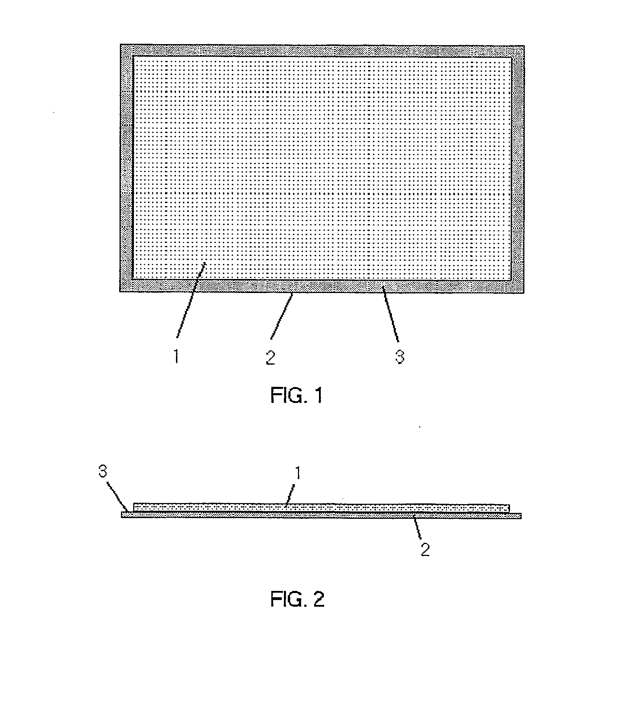

The mat shown in figures 1 and 2 includes an upper dust control layer 1, which is bonded to a backing layer 2 of vulcanised nitrile rubber. The backing layer 2 is preferably slightly larger than the upper layer 1, leaving a rubber border 3 that extends around the periphery of the mat. The overall size of the mat is typically 85cm x 150cm.

The dust control layer 1 comprises a tufted pile textile, which is tufted onto a substrate (not shown), for example of non-woven polyester or woven polyester or polypropylene. Typically the tufted pile textile material has a pile length of about 10mm, and a pile weight of about 870gm⁻². The substrate typically has a weight of approximately 100 gm⁻². The rubber backing layer typically has a thickness of 1.2 to 1.6mm and a weight of 1550 to 2100 gm⁻². Optionally, the backing layer may be provided with rubber cleats on its lower surface to reduce creep (movement) of the mat when it is stepped on. A mat with a cleated backing is described for example in WO 01/21875, the entire content of which is incorporated by reference herein.

The tufted pile textile is made up of tufts of a blended yarn that includes at least 40% cotton fibres and at least 25% polyester fibres, by weight. The cotton and polyester fibres together comprise at least 90% of the total fibre content of the blended yam. The tufts of blended yarn cover substantially the whole of the tufted pile surface. The blended yam is made by mixing the cotton and polyester fibres and spinning them together. This increases the mechanical contact between the fibres and improves the performance of the yarn. Typically, the tufts of blended yam include three or more plies of yarn. For example, the yarn may include six plies and have a decitex of 4430 ±100.

The polyester fibre typically has a denier of about 1.5. The blended yarn may optionally include up to 10% microfiber polyester of approximately 0.9 denier. For example, the blend may consist of 50% cotton with 45% polyester and 5% polyester microfiber.

The backing layer may optionally be made of a foamed rubber. This reduces the weight of the mat and increases its flexibility and stability.

The mat is manufactured by vulcanising the tufted pile dust control layer to a sheet of nitrile rubber in a heated press, for example at a temperature of 170°C and a pressure of 30 pounds per square inch, applied for a cycle time of up to twenty minutes. The temperature is controlled to ensure that the polyester does not melt or become fused to the cotton fibres. The heat from the press bonds the dust control layer to the rubber sheet and at the same time vulcanises the rubber to form the backing layer. The mat is then removed from the press and allowed to cool and, if necessary, the edges of the backing layer are trimmed. The mat may then be laundered, to raise the pile of the dust control fabric. Optionally, the backing may be provided with valves, to allow the passage of water during the spin drying process.

The performance of mats according to the invention was compared with that of conventional cotton mats, by performing the tests set out below.

### Water absorbency test

It is known that synthetic fibres, of which nylon fibres are the most frequently used yarn for rental mats, have significantly lower absorbency characteristics than cotton fibre. It could be feared therefore that the blended yarn used in the invention might decrease the absorbency performance when the mats are in use on the floor.

Two sample mats with blended cotton/polyester tufts were therefore compared with a 100% cotton tufted mat using an absorbency test. Each mat was laid flat on the floor and a tray containing 1 litre of water was placed in front of the mat. A person stepped into the tray with both feet and thereafter took three steps on the mat and finally placed both feet on a piece of blotting paper positioned behind the mat. This sequence of walking from tray to mat to blotting paper was repeated fifty times for each mat, whereafter the increase in the weight of the blotting paper was determined.

The test was conducted twice for each type of mat, first on a dry mat and then again on a mat that had previously been wetted with two litres of water, sprayed onto the mat.

Mats with tufted pile surfaces made with three different yarns were tested, each yarn including six plies and having a decitex of 4430 ±100. The fibre content of each of the yarns was as follows:
- Yarn A:: 100% cotton
- Yarn B:: 65% cotton, 35% polyester
- Yarn C:: 50% cotton, 45% polyester, 5% polyester microfibre

In Yarns B and C, the polyester fibre had a denier of 1.5 and in Yarn C the microfiber polyester had a denier of 0.9.
The results are summarised in table A below.

**Table A: Water absorbency**

| | Weight increase (dry mat) | Weight increase (mat wetted with 2 litres of water) |
|---|---|---|
| Yarn A | 7.66g | 28.64g |
| Yarn B | 4.48g | 20.15g |
| Yarn C | 4.38g | 24.09g |

The change of the weight of the blotting paper depends on the amount of water remaining on the feet of the person after stepping off the mat, and therefore indicates the effectiveness of the mat. A lower weight change corresponds to a mat with better absorbency characteristics, whereas a larger weight change corresponds to a mat with poorer absorbency characteristics. As can be seen from table A, the blended tufted mats exhibited similar, or even improved performance, when compared to the 100% cotton tufted mat.

### Spin drying test

The ease with which the mats can be dried after washing was assessed by washing and spin drying the mats, and then weighing them to determine the amount of water remaining. The sample mats each had a nitrile rubber backing and a tufted pile surface with the same number of plies, the same overall decitex and a tuft density of 870 g m⁻². Mats with tufted pile surfaces made with the same three yarns (Yarns A, B and C) as described above were tested, and the results are summarised in table B below.

**Table B: moisture level after spin drying**

| | |
|---|---|
| Yarn A | 850 g/m² |
| Yarn B | 720 g/m² |
| Yarn C | 670 g/m² |

It can clearly be seen from Table B that, compared with an equivalent 100% cotton mat of the prior art, the mats according to the invention had a significantly lower residual moisture content after spin drying. The mats according to the mats therefore need less tumble drying than conventional 100% cotton mats, providing time and energy savings for the laundry and reduced wear on the mats.

### Yarn loss test

The yarn loss that a mat may experience in use owing to repeated washing and drying was assessed by putting sample mats through a series of washing, spin drying and tumble drying cycles, and weighing the mats at predetermined intervals to determine the amount of yarn lost. The sample mats all had a cleated solid nitrile rubber backing and a tufted pile surface with the same number of plies, the same overall decitex and a tuft density of 870 g m⁻². Mats with tufted pile surfaces made with the same three yarns (Yarns A, B and C) as described above were tested, and the results are summarised in table C below.

**Table C: Yarn loss after washing and drying (no. of cycles)**

| | 1 cycle | 50 cycles | 100 cycles | 150 cycles | 175 cycles |
|---|---|---|---|---|---|
| Yarn A | 3.75% | 20.00% | 30.00% | 40.05% | 43.13% |
| Yarn B | 1.88% | 16.25% | 28.13% | 36.26% | 40.00% |
| Yarn C | 2.50% | 15.63% | 26.88% | 33.75% | 37.50% |

It can clearly be seen from Table C that, compared with an equivalent 100% cotton mat of the prior art, the mats according to the invention had a significantly lower loss of pile yarn caused by the laundry processes, which means prolonged lifetime of the mat.

### Colour change

The colour change of the mats with repeated washings was assessed visually by comparing a mat washed once with another of the same type after 175 washing cycles.

The results are indicated in table D, the colour change being assessed as a rating on a scale of 1 to 10, with 10 being best (i.e. least colour change).

**Table D: colour change**

| Yarn | Colour change rating |
|---|---|
| Yarn A | 4 |
| Yarn B | 7 |
| Yarn C | 8 |

It can be seen from table D that the mats according to the invention (with yarns B and C) had a lower colour change rating than conventional 100% cotton mats, indicating that they retained their original colours much better. In this area the mats also therefore outperformed the conventional mat.

## Claims

1. A washable floor mat having a tufted pile textile surface and an elastomer backing layer, wherein the textile surface includes tufts of a blended yarn including at least 40% cotton fibres and at least 25% polyester fibres, the cotton and polyester fibres together comprising at least 90% of the total fibre content of the blended yarn; **characterised in that** the polyester fibres are not fused to the cotton fibres.

2. A washable floor mat according to claim 1, wherein the cotton and polyester fibres together comprise at least 95%, and preferably at least 99%, of the total fibre content of the blended yarn.

3. A washable floor mat according to claim 1 or claim 2, wherein the blended yarn includes at least 50% cotton fibres and at least 35% polyester fibres.

4. A washable floor mat according to any one of the preceding claims, wherein the blended yarn comprises at least 90%, preferably at least 95%, more preferably at least 99%, of the tufted pile surface.

5. A washable floor mat according to any one of the preceding claims, wherein the cotton and polyester fibres of the blended yam are spun together.

6. A washable floor mat according to any one of the preceding claims, wherein the tufts of blended yarn include from one to six plies of yarn.

7. A washable floor mat according to any one of the preceding claims, wherein the polyester fibre has a denier of 1 to 6, preferably 1-2, more preferably about 1.5.

8. A washable floor mat according to any one of the preceding claims, wherein the blended yarn includes up to 10% microfiber polyester, said microfiber polyester having a size of less than 1 denier, preferably approximately 0.9 denier.

9. A washable floor mat according to any one of the preceding claims, wherein the textile surface includes a woven or non-woven substrate.

10. A washable floor mat according to claim 9, wherein the substrate is formed of a polyester material, a polypropylene material or a copolymer material.

11. A washable floor mat according to any one of the preceding claims, wherein the backing layer is made of rubber, preferably nitrile rubber.

12. A washable floor mat according to claim 11, wherein the backing layer is made of a foamed rubber.

13. A washable floor mat according to any one of the preceding claims, wherein the thickness of the backing layer is from 0.5mm to 4mm.

14. A method of manufacturing a washable floor mat, said method comprising the steps of:
a. mixing cotton fibres and polyester fibres together;
b. spinning the mixed cotton fibres and polyester fibres together to form a blended yarn comprising at least 40% cotton fibres and at least 25% polyester fibres, and wherein the cotton fibres and the polyester fibres comprise at least 90% of the total fibre content of the blended yarn;
c. tufting a plurality of the blended yarns of step (b) through a woven or non-woven substrate to form a tufted pile surface, wherein the blended yam comprises at least 90% of the tufted pile surface; and
d. bonding the tufted pile surface of step (c) to an elastomer backing layer by positioning the tufted pile surface on the elastomer backing layer and subjecting the tufted pile surface and the elastomer backing layer to heat and pressure;
e. **characterised in that** during the bonding process, the temperature is controlled to ensure that the polyester fibres are not fused to the cotton fibres.

15. A method according to claim 14, in which the tufted pile textile surface is bonded to the elastomer backing layer by vulcanising the backing layer in a heated press.

## Patentansprüche

1. Waschbare Bodenmatte mit einer Tuftingflor-(bzw. Nadelflor-)Textiloberfläche und einer Elastomerrückschicht, wobei die Textiloberfläche Faserbüschel eines gemischten Garns enthält einschließlich von mindestens 40 % Baumwollfasern und mindestens 25 % Polyesterfasern, wobei die Baumwollfasern und Polyesterfasern zusammen mindestens 90 % des gesamten Fasergehalts des gemischten Garns umfassen; **dadurch gekennzeichnet, dass** die Polyesterfasern nicht mit den Baumwollfasern verschmolzen sind.

2. Waschbare Bodenmatte nach Anspruch 1, wobei die Baumwollfasern und Polyesterfasern zusammen mindestens 95 % und vorzugsweise mindestens 99 % des gesamten Fasergehalts des gemischten Garns umfassen.

3. Waschbare Bodenmatte nach Anspruch 1 oder 2, wobei das gemischte Garn mindestens 50 % Baumwollfasern und mindestens 35 % Polyesterfasern enthält.

4. Waschbare Bodenmatte nach einem der vorhergehenden Ansprüche, wobei das gemischte Garn mindestens 90 %, vorzugsweise mindestens 95 %, stärker bevorzugt mindestens 99 % der Tuftingflor-Oberfläche umfasst.

5. Waschbare Bodenmatte nach einem der vorhergehenden Ansprüche, wobei die Baumwollfasern und Polyesterfasern des gemischten Garns zusammengesponnen sind.

6. Waschbare Bodenmatte nach einem der vorhergehenden Ansprüche, wobei die Faserbüschel des gemischten Garns von eins bis sechs Garnlagen enthalten.

7. Waschbare Bodenmatte nach einem der vorhergehenden Ansprüche, wobei die Polyesterfaser ein Denier von 1 bis 6, vorzugsweise von 1-2, stärker bevorzugt etwa 1,5 aufweist.

8. Waschbare Bodenmatte nach einem der vorhergehenden Ansprüche, wobei das gemischte Garn bis zu 10 % Mikrofaserpolyester enthält, wobei der Mikrofaserpolyester eine Größe von weniger als 1 Denier, vorzugsweise von annähernd 0,9 Denier aufweist.

9. Waschbare Bodenmatte nach einem der vorhergehenden Ansprüche, wobei die Textiloberfläche ein gewebtes oder nicht gewebtes Substrat enthält.

10. Waschbare Bodenmatte nach Anspruch 9, wobei das Substrat aus einem Polyestermaterial, einem Polypropylenmaterial oder aus einem Copolymermaterial hergestellt ist.

11. Waschbare Bodenmatte nach einem der vorhergehenden Ansprüche, wobei die Rückschicht aus Gummi hergestellt ist, vorzugsweise aus Nitrilgummi.

12. Waschbare Bodenmatte nach Anspruch 11, wobei die Rückschicht aus einem geschäumten Gummi hergestellt ist.

13. Waschbare Bodenmatte nach einem der vorhergehenden Ansprüche, wobei die Dicke der Rückschicht in dem Bereich zwischen 0,5 mm bis 4 mm liegt.

14. Verfahren zum Herstellen einer waschbaren Bodenmatte, wobei das Verfahren die folgenden Schritte umfasst:
a. ein Zusammenmischen der Baumwollfasern und Polyesterfasern;
b. ein Spinnen der gemischten Baumwollfasern und Polyesterfasern zusammen, um ein gemischtes Garn herzustellen, das mindestens 40 % Baumwollfasern und mindestens 25 % Polyesterfasern umfasst, und wobei die Baumwollfasern und die Polyesterfasern mindestens 90 % des gesamten Fasergehalts des gemischten Garns umfassen;
c. ein Tuften von mehreren der gemischten Garne des Schrittes (b) durch ein gewebtes oder nicht gewebtes Substrat, um eine Tuftingflor-Oberfläche herzustellen, wobei das gemischte Garn mindestens 90 % der Tuftingflor-Oberfläche umfasst; und
d. ein Binden der Tuftingflor-Oberfläche des Schrittes (c) an eine Elastomerrückschicht, indem die Tuftingflor-Oberfläche auf die Elastomerrückschicht gelegt wird und dann die Tuftingflor-Oberfläche und die Elastomerrückschicht Hitze und Druck ausgesetzt werden;
e. **dadurch gekennzeichnet, dass** während des Bindungsverfahrens die Temperatur gesteuert wird, um zu gewährleisten, dass die Polyesterfasern nicht mit den Baumwollfasern verschmolzen werden.

15. Verfahren nach Anspruch 14, in dem die Tuftingflor-Textiloberfläche an die Elastomerrückschicht durch ein Vulkanisieren der Rückschicht in einer beheizten Presse gebunden wird.

## Revendications

1. Paillasson lavable ayant une surface textile touffetée et une couche de support élastomère, dans lequel la surface textile comprend des touffes d'un fil mélangé comprenant au moins 40 % de fibres de coton et au moins 25 % de fibres de polyester, les fibres de coton et de polyester comprenant conjointement au moins 90 % de la teneur totale en fibres du fil mélangé ; **caractérisé en ce que** les fibres de polyester ne sont pas fusionnées aux fibres de coton.

2. Paillasson lavable selon la revendication 1, dans lequel les fibres de coton et de polyester comprennent conjointement au moins 95 %, et de préférence au moins 99 %, de la teneur totale en fibres du fil mélangé.

3. Paillasson lavable selon la revendication 1 ou la revendication 2, dans lequel le fil mélangé comprend au moins 50 % de fibres de coton et au moins 35 % de fibres de polyester.

4. Paillasson lavable selon l'une quelconque des revendications précédentes, dans lequel le fil mélangé comprend au moins 90 %, de préférence au moins 95 %, de manière plus préférée au moins 99 %, de la surface touffetée.

5. Paillasson lavable selon l'une quelconque des revendications précédentes, dans lequel les fibres de coton et de polyester du fil mélangé sont filées ensemble.

6. Paillasson lavable selon l'une quelconque des revendications précédentes, dans lequel les touffes de fil mélangé comprennent d'un à six brins de fil.

7. Paillasson lavable selon l'une quelconque des revendications précédentes, dans lequel la fibre de polyester présente un denier de 1 à 6, de préférence de 1 à 2, de manière plus préférée de environ 1,5.

8. Paillasson lavable selon l'une quelconque des revendications précédentes, dans lequel le fil mélangé comprend jusqu'à 10 % de microfibres de polyester, lesdites microfibres de polyester ayant une taille inférieure à 1 denier, de préférence approximativement 0,9 denier.

9. Paillasson lavable selon l'une quelconque des revendications précédentes, dans lequel la surface textile comprend au moins un substrat tissé ou non-tissé.

10. Paillasson lavable selon la revendication 9, dans lequel le substrat est formé d'un matériau polyester, un matériau polypropylène ou un matériau copolymère.

11. Paillasson lavable selon l'une quelconque des revendications précédentes, dans lequel la couche de support est faite de caoutchouc, de préférence de caoutchouc nitrile.

12. Paillasson lavable selon la revendication 11, dans lequel la couche de support est faite d'un caoutchouc mousse.

13. Paillasson lavable selon l'une quelconque des revendications précédentes, dans lequel l'épaisseur de la couche de support est de 0,5 mm à 4 mm.

14. Procédé de fabrication d'un paillasson lavable, ledit procédé comprenant les étapes consistant à :
a. mélanger des fibres de coton et des fibres de polyester conjointement ;
b. filer les fibres de coton et les fibres de polyester mélangées conjointement pour former un fil mélangé comprenant au moins 40 % de fibres de coton et au moins 25 % de fibres de polyester, et où les fibres de coton et les fibres de polyester comprennent au moins 90 % de la teneur totale en fibres du fil mélangé ;
c. touffeter une pluralité des fil mélangés de l'étape (b) sur un substrat tissé ou non-tissé pour former une surface touffetée, où le fil mélangé comprend au moins 90 % de la surface touffetée ; et
d. coller la surface touffetée de l'étape (c) à une couche de support élastomère en positionnant la surface touffetée sur la couche de support élastomère et en exposant la surface touffetée et la couche de support élastomère à la chaleur et à la pression ;
e. **caractérisé en ce que** durant le processus de collage, la température est contrôlée pour garantir que les fibres de polyester ne sont pas fusionnées aux fibres de coton.

15. Procédé selon la revendication 14, dans lequel la surface textile touffetée est collée à la couche de support élastomère par vulcanisation de la couche de support dans une presse chauffée.
